# EUROPÄISCHE PATENTSCHRIFT

(11) **EP 0 773 645 B1**
(45) Veröffentlichungstag und Bekanntmachung des Hinweises auf die Patenterteilung: **21.12.2005**
(21) Anmeldenummer: 96117438.0
(22) Anmeldetag: 30.10.1996
(51) Int. Cl.: H04J 3/14, H04Q 11/04

(54) **Verfahren zur Auswahl von verketteten Signalen aus Empfangssignalen der Synchron-Digital-Hierarchie**
Method for selecting concatenated signals of a received signal of SDH
Méthode de sélection de signaux concaténés à partir d'un signal reçu selon la hiérarchie numérique synchrone (SDH)

(30) Priorität: 13.11.1995 DE 19542230
(43) Veröffentlichungstag der Anmeldung: 14.05.1997
(73) Patentinhaber: SIEMENS AKTIENGESELLSCHAFT, 80333 München (DE)
(72) Erfinder: Müller, Horst, Dipl.-Ing., 82069 Hohenschäftlarn (DE)

(56) Entgegenhaltungen:
- US-A- 5 151 902
- US-A- 5 257 261
- US-A- 5 386 418
- PATENT ABSTRACTS OF JAPAN vol. 017, no. 331 (E-1386), 23. Juni 1993 & JP 05 037598 A (FUJITSU LTD), 12. Februar 1993

## Beschreibung

Die Erfindung betrifft ein verfahren zur Auswahl von verketteten Signalen nach dem Oberbegriff des Anspruchs 1.

Für die Übertragung innerhalb der Synchron-Digital-Hierarchie (SDH) werden digitale Signale in Pulsrahmen eingefügt. Der Aufbau und die Funktionsweise der SDH ist in den CCITT-Empfehlungen, insbesondere der CCITT-Empfehlung G.709, beschrieben.

Um auch Signale übertragen zu können, die keine empfohlene Datenrate aufweisen, werden diese "verketteten" Signale (Concatenated Signals) auf mehrere "verkettete" Pulsrahmen verteilt. Die in auf zwei oder mehrere Pulsrahmen aufgeteilten Signale werden wiederum in einen Pulsrahmen mit größerer Übertragungskapazität, beispielsweise ein Transportmodul, eingefügt.

Von den Normungsgremien werden zwei Methoden zum verketten vorgeschlagen.

Die neue ITU-Empfehlung G.70x (zukünftig G.707) beschreibt die Möglichkeit TU-2-Signale (6 Mbit/s) zu Signalen mit höherer Bitrate zu verketten und ebenso wird die Verkettung von AU-4-Signalen festgelegt. Prinzipiell ist die Verkettung beliebiger Signale bzw. beliebiger Pulsrahmen möglich, wobei zunächst nur an die Verkettung von Pulsrahmen gleichen Umfangs gedacht ist.

Man unterscheidet die "Contiguous Concatenation" und die "Virtual Concatenation". Bei der "Contiguous Concatentation" wird beim Verketten von Pulsrahmen, beispielsweise TU-x oder AU-4, nur in der ersten TU-x bzw. AU-4 ein gültiger Pointerwert übertragen, der den ersten Pulsrahmen und damit den Anfang des "verketteten" Signals kennzeichnet. Den weiteren verketteten Signalen wird, da diese fest miteinander gekoppelt sind, kein Pointer zugeordnet. Statt dessen wird eine sogenannte "Concatenation Indication" (CI) anstelle des Pointers eingefügt. Die "Concatenation Indication" ist zwei Bytes lang und enthält in den Bits 1 bis 4 die Kombination "1001". Diese bestimmen, daß die verketteten Pulsrahmen mit ihren Signalen zusammengehalten werden müssen und daß eine Pointer-Operation im ersten Pulsrahmen TU-x bzw. AU-4 auch bei den nachfolgenden Pulsrahmen durchgeführt werden muß. Bei einer Anpassung der Datenrate durch eine Pointer-Operation muß bei allen verketteten Pulsrahmen, die gemeinsam in einem Transportcontainer übertragen werden, derselbe "Pointersprung" von beispielsweise einem Byte erfolgen. So wird sichergestellt, daß die Reihenfolge der einzelnen Bytes nicht gestört wird.

Bei der "Virtual Concatenation" wird beim Verketten in jeden Pulsrahmen derselbe Pointerwert eingesetzt. Eine Kennzeichnung, daß es sich um verkettete Pulsrahmen handelt fehlt aber. Daher muß das "Telecommunication Management Network" (TMN) diese verketteten Pulsrahmen in einem gemeinsamen Transportcontainer (STM-N) im SDH-Netz führen. Zwar kann es vorkommen, daß einzelne in Pulsrahmen in Form von Datenblökken übertragene Signale durch individuelle Anpassung in Cross-Connect-Einrichtungen geringfügig unterschiedliche Laufzeiten haben. Diese Laufzeitunterschiede, die ganzen Bytes entsprechen, können aber in geeigneten Pufferspeichern wieder einfach ausgeglichen werden, da die Anfangslagen der einzelnen Datenblöcke durch die Pointerwerte gekennzeichnet sind. Dies erfolgt durch das Einschalten oder Überbrücken von Laufzeiten in die einzelnen Signalwege. In der europäischen Anmeldung E 0 42 98 88 ist dieses Verfahren ausführlich beschrieben.

In den Normungsgremien werden nun zur Erhöhung der Übertragungssicherheit sogenannte Protection-Verfahren vorgeschlagen, die darauf beruhen, daß ein Signal auf verschiedenen Signalwegen durch SDH-Subnetze geführt wird und jeweils empfangsseitig das qualitativ bessere Signal ausgewählt wird. Die Auswahl erfolgt auf der Ebene einzelner Pulsrahmen, beispielsweise für einzelne Tributary Units TU-x, beschränkt sich also nicht auf das Umschalten zwischen zwei Empfangssignalen.

Bei der Übertragung eines Signals in verketteten Pulsrahmen tritt nun das Problem auf, daß der Umschalter nicht auf die Signalqualität in einzelnen Pulsrahmen reagieren darf und keine Datenblöcke aus verschiedenen Übertragungswegen des SDH-Subnetzes auswählen darf, da sonst die Laufzeitunterschiede zu groß sein können (≥ 125 µs), um die ursprüngliche Reihenfolge der Bytes des in verketteten Pulsrahmen übertragenen Signals wiederherstellen zu können.

Dies führt besonders bei der "Virtual Concatenation" zu Problemen, da das Netzelement, das diese Auswahl vornimmt, üblicherweise keinerlei Information über eine Verkettung der Signale besitzt. Dies ist nur dem Telecommunication Management Network bekannt.

Bei der "Contiguous Concatenation" kann das Netzelement zwar die Verkettung anhand der "Concatenation Indication" erkennen, es fehlen jedoch die Kriterien, um die für die Auswahl vorgesehenen Schaltmittel zu steuern.

Aufgabe der Erfindung ist es, ein Verfahren anzugeben, das eine schnelle und fehlerfreie Umschaltung auch bei verketteten Datenblöcken ermöglicht.

Ein solches Verfahren ist in Anspruch 1 angegeben. Vorteilhafte Weiterbildungen der Erfindung sind in den Unteransprüchen angegeben.

Der Vorteil des erfindungsgemäßen Verfahrens liegt neben der einfachen Realisierbarkeit in den extrem kurzen Umschaltzeiten. Verfahren, die eine zentrale Steuerung verwenden sind wegen der geforderten kurzen Umschaltzeiten (≤ 50 ms) nicht praktikabel.

Besonders einfach wird dieses Verfahren, wenn die Kennzeichnung der gestörten Datenblöcke durch Flag-Bits erfolgt. Hierdurch werden Steuerleitungen überflüssig.

Da bei einigen Netzelementen ohnehin zusätzliche Daten (parallel oder durch Erhöhung der Übertragungsrate) zur Steuerung und Überwachung übertragen werden, kann diese Zusatzinformation ebenfalls die Flag-Bits enthalten.

Durch Vergleich der den Pulsrahmen, die auf unterschiedlichen Wegen übertragen wurden, zugeordneten Störungsmeldungen ist auch dann eine optimale Auswahl möglich, wenn auf beiden Signalwegen Störungen auftreten.

Die Erfindung wird anhand eines Ausführungsbeispiels näher erläutert.

Es zeigen:
- Figur 1: Ein Subnetzwerk zur zweifachen Übertragung von Signalen,
- Figur 2 bis Figur 4: unterschiedliche Umschaltmöglichkeiten,
- Figur 5: eine Eingangs-Interface-Schaltung zum Einfügen von Flag-Bits,
- Figur 6: einen Pulsrahmen mit eingefügten Flag-Bits
- Figur 7: eine Eingangs-Interface-Schaltung zur Bewertung der Signalqualität und.
- Figur 8: eine Bewertungseinrichtung mit Signalumschaltung.

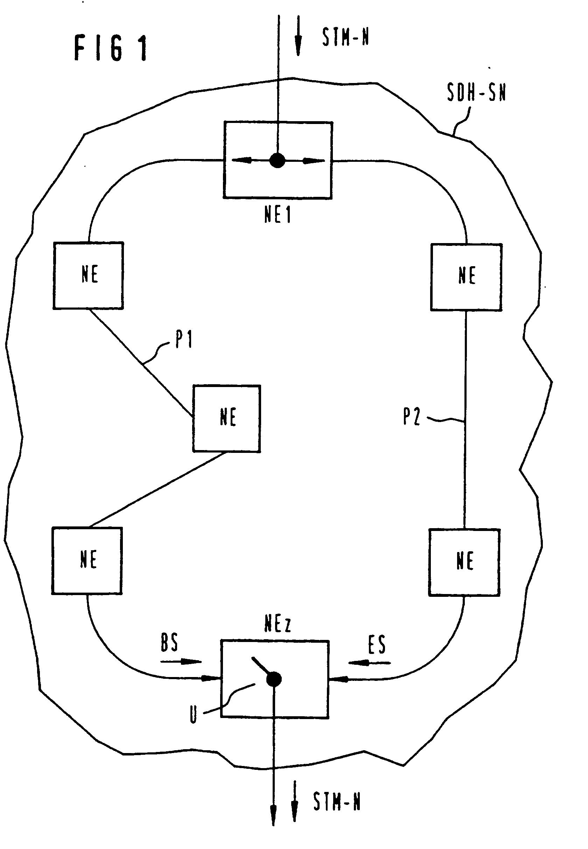

Figur 1 zeigt als Teil eines SDH-Datennetzes ein Subnetz SDH-SN, dessen Eingang ein in Transportmodule eingefügtes Signal STM-N zugeführt wird. Über ein erstes Netzelement NE1 wird dieses Signal als Betriebssignal BS und als Ersatzsignal ES über zwei verschiedene Signalwege P1 und P2, in denen weitere Netzelemente NE angeordnet sein können, einem Netzelement NEz zugeführt, das mit Hilfe eines Umschalters U das qualitativ bessere Empfangssignal auswählt und beispielsweise an ein weiteres Subnetz weiterleitet.

Die Qualität der Empfangssignale wird ständig überprüft, beispielsweise auf Signalverlust eines Rahmenkennungswortes, erhöhte Fehlerraten, Alarm Indication Signal AIS, usw., um bei Störungen des genutzten Signals auf das ungestörte umzuschalten.

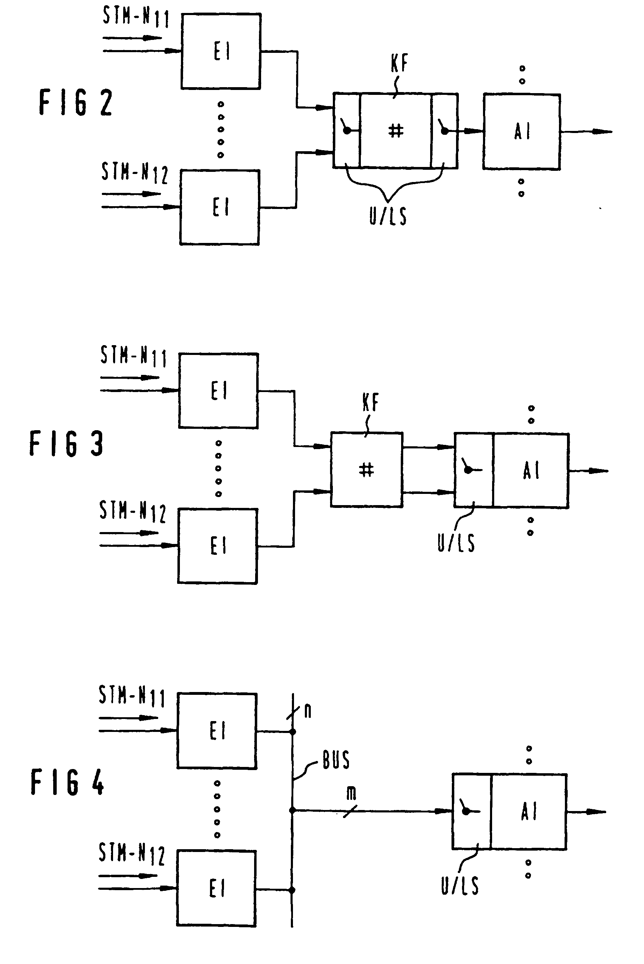

In Figur 2 ist ein Koppelfeld KF dargestellt, dem über Eingangs-Interface-Schaltungen EI mehrere STM-N-Signale und Ersatzsignale, beispielsweise STM-N₁₁ und das Ersatzsignal STM-N₁₂, zugeführt werden. Zuvor werden die STM-N-Signale in Signale, die eingefügten Pulsrahmen zugeordnet sind, aufgeteilt und häufig in andere Formate umgesetzt. Die Auswahl des qualitativ besseren verketteten Signals erfolgt durch Umschalter U, die vor oder nach dem Koppelfeld KF angeordnet sind. Über ein Ausgangs-Interface AI wird das qualitativ bessere (ungestörte) Signal ausgegeben. Wie bereits Eingangs beschrieben umfaßt die Umschaltung hierbei in der Regel nicht die gesamten empfangenen Signale, sondern erfolgt auf der Ebene der eingefügten Pulsrahmen, die vom Koppelfeld durchgeschaltet werden.

Bei der in Figur 3 dargestellten Variante ist der Umschalter U dem Ausgangs-Interface AI zugeordnet.

Figur 4 zeigt ein BUS-System BUS anstelle eines Koppelfeldes, bei dem die Auswahl wiederum über einen dem Ausgangs-Interface zugeordneten Umschalter U erfolgt.

In den Figuren 2 bis 4 wurde jeweils nur ein Paar der Eingangs-Interface-Schaltungen und ein Ausgangs-Interface dargestellt, um die Zeichnung übersichtlicher zu gestalten.

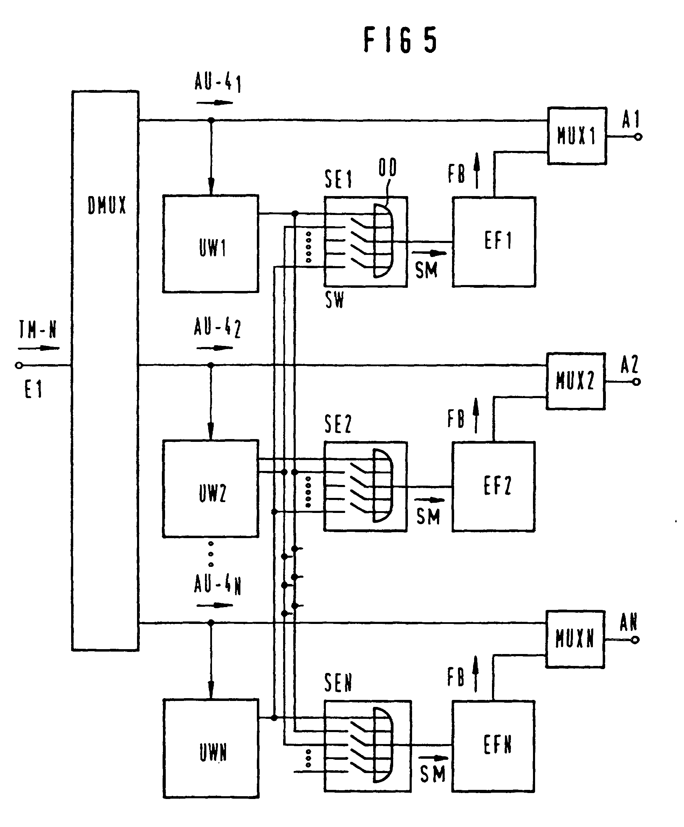

In Figur 5 ist das Prinzipschaltbild einer Eingangs-Interface-Schaltung EI dargestellt, die einen Demultiplexer DMUX, Überwachungsschaltungen UW, Selektorschaltungen SE, Einfügeeinrichtungen EF und Multiplexer MUX enthält. Darüber hinaus sind natürlich Schaltungen zur elektrischen Anpassung, Abtastung, Synchronisierung usw. vorgesehen.

Jede Selektorschaltung SE enthält einen Schaltersatz SW mit einem nachgeschaltetem ODER-Gatter OD. Der Ausgang jeder Überwachungsschaltung ist mit jeweils einem Eingang jeder Selektorschaltung verbunden (beschränkt man sich auf wenige zu verkettende Pulsrahmen, dann reichen entsprechend wenige Selektorschaltungen und Verbindungen aus).

Die Steuerung der Schalter erfolgt bei der "Contiguous Concatenation" durch die "Concatenation Indication" oder durch das TMN und bei der "Virtual Concatenation" allein durch das TMN.

Soll beispielsweise ein ATM-Signal mit einer Datenrate von 622 Mbit/s übertragen werden, dann sind vier AU-4-Signale zu verketten. Diese vier AU-4-Signale können unmittelbar aufeinanderfolgend in einem STM-N-Pulsrahmen angeordnet sein, sie können aber auch beliebig in einem STM-N-Pulsrahmen verteilt sein. Das am Eingang E1 des Demultiplexers DMUX empfangene STM-N-Signal wird in N AU-4₁ bis AU-4_{N}-Signale aufgeteilt, die an Ausgängen A1 bis AN über Umschalter U (z.B. Figur 3) der Ausgangs-Interfaceschaltung zugeführt werden.

Sind unter anderem die Pulsrahmen AU-4₁ und AU-4₂ miteinander verkettet, dann werden die entsprechenden, hier obersten, Schalter geschlossen. Die übrigen Schalter bleiben geöffnet.

Jedes dieser AU-4-Signale wird überwacht. Erkennt eine Überwachungsschaltung, beispielsweise UW1, daß das AU-4₁ Signal gestört ist, so meldet sie dies der zugehörigen ersten Selektorschaltung SE1 und gleichzeitig den allen verketteten Pulsrahmen zugeordneten Selektorschaltungen. In derselben Weise wird eine Störung von der zweiten Überwachungsschaltung UW2 an den verketteten Pulsrahmen zugeordnete Selektorschaltungen übertragen usw. Dies hat immer zur Folge, daß Störungen innerhalb eines Pulsrahmens mehrere Störmeldungen SM an den Ausgängen der Selektorschaltungen SE1, SE2, ... aller verketteten Pulsrahmen zugeordneten Selektorschaltungen bewirken. Die Störmeldungen können über separate Leitungen als binäres Umschaltsignal für die Umschalter U (Figur 2 bis 4) übertragen werden.
Besonders vorteilhaft ist jedoch, wenn in dem Pulsrahmen über Einfügeeinrichtungen EF1, EF2, ... EFN sogenannte "Flag-Bits" gesetzt werden, die über eine einfache Logikschaltung LS (Figur 2 bis 4) die Umschalter betätigen. Diese Flag-Bits werden über taktgesteuerte Multiplexer MUX 1 bis MUX N in den Overhead (OH) der AU-4-Pulsrahmen eingefügt.

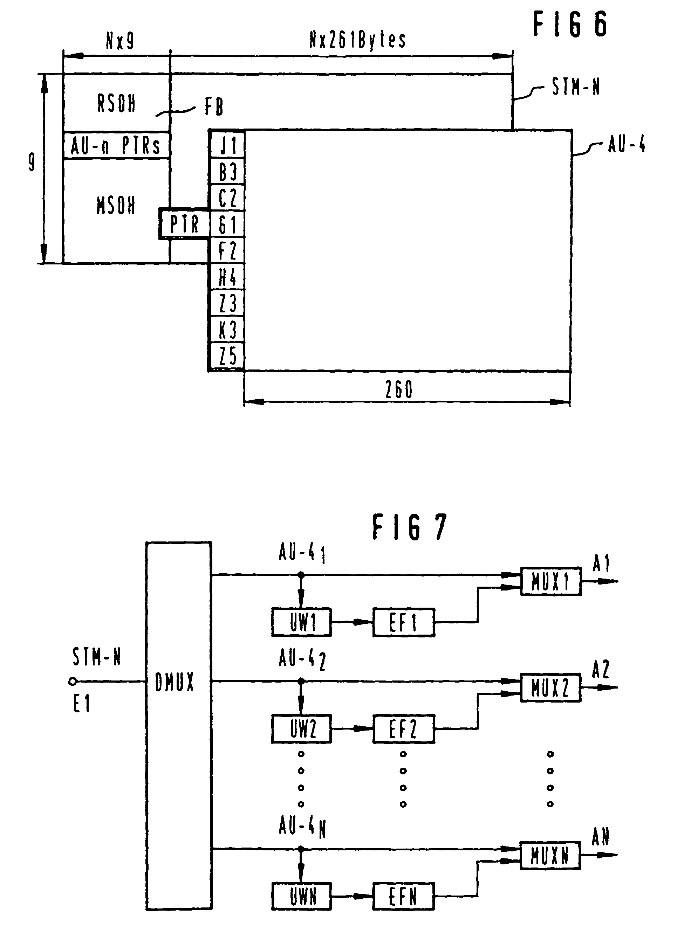

Figur 6 zeigt als Beispiel ein STM-N Transportmodul und eines von vier AU-4-Signalen, die in dem dargestellt in dem Transportmodul übertragen werden.

Die Störungsmeldung in Form von Flagbits FB kann z.B. in der Zusatzinformation zur Steuerung und Überwachung übertragen werden, wenn die geräteinterne Konzeption und Übertragungskapazität dies gestattet, oder in freie Bytes des Regenerators Section Overheads RSOH oder des Multiplexer Section Overheads MSOH eingefügt werden. Die Flagbits FB können auch in freie Bytes des AU-4-Pointers (freie Bytes 2, 3, 5 oder 6) oder in freie Bits des VC-4-Pathoverheads POH (z.B. H4-byte; G1-byte (Bit8); K3-Byte (Bits 5-8)) eingesetzt werden.

Für die Verkettung von TU-x-Pulsrahmen gelten entsprechende Überlegungen. Da verkettete TU-x-Pulsrahmen stets in einem Transportmodul STM-1 übertragen werden, wird das in einem STM-1-Pulsrahmen eingefügte Signal dem Eingang des Demultiplexers zugeführt, der es in 21 TU-2-Pulsrahmen eingefügte Signale aufteilt, von denen wiederum mehrere miteinander verkettet sind.
Die Umschaltung wird jeweils von einer einfachen jedem Umschalter zugeordneten Logikschaltung LS beim Erkennen eines Flag-Bits (oder einer bestimmten eventuell redundanten Bitkombination) ausgelöst.

Bei der Übertragung von verketteten TU-2-Pulsrahmen können die Flagbits in der Zusatzinformation zur Steuerung und Überwachung oder in freien Bytes des RSOH oder MSOH eingefügt werden. Oder die Flagbits können in den freien U4-byte des TU-2 Pulsrahmens übertragen werden, dabei ist auch eine Quantifizierung möglich.

Wenn die Wahrscheinlichkeit für das Auftreten einer Störung sehr gering ist, könnte sogar auf die gleichzeitige Überwachung des entsprechenden in verketteten Pulsrahmen übertragenen Ersatzsignals verzichtet werden. Günstiger ist aber die Überwachung beider Signale und die Auswahl des ungestörten bzw. weniger gestörten Signals. Für den Fall, daß sowohl Betriebs- als auch Ersatzsignal gestört sind kann eine Mehrheitsentscheidung durch Bewertung der ungestörten Pulsrahmen erfolgen oder eine Umschaltung vermieden werden.

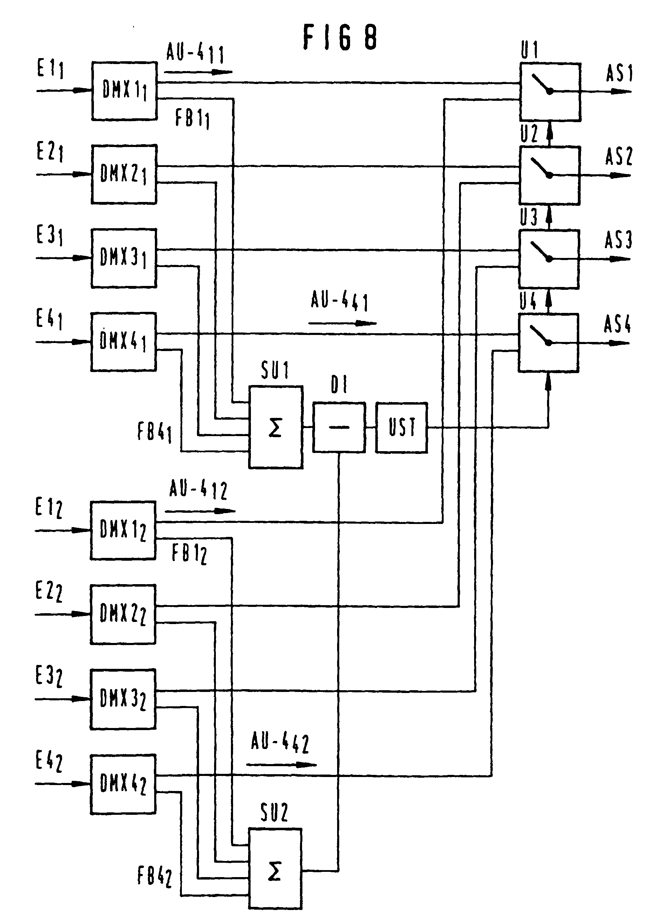

In den Figuren 7 und 8 sind ein Eingangs-Interface und eine Bewertungsschaltung für eine Auswahl des qualitativ besseren Signals, beispielsweise durch eine die Anzahl der gestörten verketteten Pulsrahmen bewertende Mehrheitsentscheidung, dargestellt. In Figur 7 ist die Eingangs-Interface-Schaltung gezeigt, die entsprechend Figur 5 einen Demultiplexer DMUX, Überwachungsschaltungen UW, Einfügeeinrichtungen EF und Multiplexer MUX enthält.

Das am Eingang E1 des Demultiplexers DMUX empfangene STM-N-Signal wird wie im bereits behandelten Beispiel entsprechend Figur 5 in N AU-4₁ bis AU-4ₙ-Signale aufgeteilt.

Jedes dieser AU-4-Signale wird überwacht. Erkennt eine Überwachungsschaltung, beispielsweise UW1, daß das AU-4₁-Signal gestört ist, so wird über die Einfügeeinrichtung EF1 und den Multiplexer MUX1 ein Flagbit in den Overhead des AU-4-Pulsrahmens eingefügt. An Ausgängen A1 bis AN werden die gegebenenfalls mit Flagbits versehenen Signale an das Koppelfeld abgegeben. Das Koppelfeld nach Figur 3 (beispielsweise) gibt an seinen Ausgängen zwei Signale in zwei Gruppen von jeweils vier verketteten Pulsrahmen AU-4₁₁ bis AU-4₄₁ und AU-4₁₂ bis AU-4₄₂ ab.

In Figur 8 ist die Bewertungsschaltung für die vier verketteten AU-4-Signale dargestellt, die Demultiplexer DMX, Summierer SU, einen Subtrahierer DI, eine Umschaltesteuerung UST und Umschalter U1 bis U4 enthält. Darüber hinaus sind natürlich Schaltungen zur elektrischen Anpassung, Abtastung, Synchronisierung usw. vorgesehen.

Die vom Koppelfeld durchgeschalteten "verketteten Signale" werden Eingängen E1₁ ...E4₁ bzw. E1₂ ... E4₂ von Demultiplexern DMX1₁.... DMX 4₁ bzw. DMX1₂... DMX 4₂ zugeführt und in AU-4 Signale Au-4₁₁ ...AU-4₄₁ bzw. AU-4₁₂ ... AU-4₄₂ und Flag-bits FB1₁ ...FB4₁ bzw. FB1₂ ...FB4₂ zerlegt (oder die Flagbits werden direkt abgefragt). In Summierern SU1 bzw. SU2 wird die Anzahl der gestörten AU-4-Signale ermittelt, in dem Subtrahierer DI erfolgt ein Vergleich der Anzahl gestörter Pulsrahmen, deren Ergebnis (Vorzeichen) über die Umschaltsteuerung UST in Verbindung mit den Umschaltern U1...U4 das qualitativ höherwertigere Signal durchgeschaltet. Die Ausgangssignale AS1 ..AS4 werden dem Ausgangsinterface AI zugeführt.

Natürlich können Maßnahmen gegen vorzeitiges Umschalten aufgrund einmaliger Störungen vorgesehen werden.

Statt lediglich die Anzahl von gestörten Pulsrahmen zu bewerten, können selbstverständlich auch Angaben über unterschiedlich schwere Störungen ausgewertet werden

Die Anordnung ist günstig, wenn die verketteten Pulsrahmen festgelegt sind. Die Störmeldungen sind dann über die gemeinsam zu betätigenden Schaltern mit allen verketteten Pulsrahmen verknüpft.

Die Steuerung der Umschalter kann selbstverständlich auch wieder entsprechend dem Eingangs-Interface nach Figur 5 erfolgen, indem die Umschaltesteuerung über Einfügeeinrichtungen in allen verketteten Pulsrahmen die entsprechenden Flagbits einfügt, die die Umschalter dann einzeln steuern.

## Patentansprüche

1. Verfahren zur Auswahl von verketteten Signalen aus Empfangssignalen (BS, ES) der Synchron-Digital-Hierarchie, die in mehreren miteinander verketteten Pulsrahmen (AU-4) über verschiedene Signalwege (P1, P2) übertragen werden,
**dadurch gekennzeichnet,**
**daß** bei Empfang mindestens eines gestörten Pulsrahmens (AU-4) diesem und den mit ihm verketteten Pulsrahmen jeweils eine Störmeldung (SM1, ...) zugeordnet wird, die ein Umschalten auf entsprechenden verketteten Pulsrahmen des anderen Empfangssignals (ES) bewirkt, die ein weniger gestörtes verkettetes Signal enthalten.

2. Verfahren nach Anspruch 1,
**dadurch gekennzeichnet,**
**daß** die Störmeldung (SM) als Zusatzinformation einer Logikschaltung (LS) zugeführt wird, die über Umschalter (U) die Auswahl aus einem der Empfangssignale (BS, ES) bewirkt.

3. Verfahren nach Anspruch 1,
**dadurch gekennzeichnet,**
**daß** die Störmeldung (SM) jeweils als Flagbit (FB) in alle verketteten Pulsrahmen (AU-4₁, AU-4₂, ...), die ein verkettetes Signal übertragen, eingefügt wird.

4. Verfahren nach Anspruch 1
**dadurch gekennzeichnet,**
**daß** jeweils die Anzahl der gestörten verketteten Pulsrahmen des Betriebs- und des Ersatzsignals ausgewertet wird und daß die verketteten Pulsrahmen eines der Empfangssignals (BS,ES) ausgewählt werden, die das qualitativ bessere verkettete Signal enthalten.

5. Verfahren nach Anspruch 1,
**dadurch gekennzeichnet,**
**daß** die Störmeldung (SM) den Grad der Störung beinhaltet und daß die verketteten Pulsrahmen eines der Empfangssignale (BS,ES) ausgewählt werden, die das qualitativ bessere verkettete Signal enthalten.

6. Verfahren nach Anspruch 1,
**dadurch gekennzeichnet,**
**daß** die Umschaltung über gemeinsam betätigte Umschalter (U1 bis U4) erfolgt.

## Claims

1. Method for selecting concatenated signals from receive signals (BS, ES) of the Synchronous Digital Hierarchy which are transmitted via different signal paths (P1, P2) in a plurality of pulse frames (AU-4) that are concatenated with one another,
**characterised in that**
upon reception of at least one errored pulse frame (AU-4) an error message (SM1, ...) is assigned in each case to said pulse frame (AU-4) and to the pulse frames concatenated with it, which error message (SM1, ...) causes a switchover to corresponding concatenated pulse frames of the other receive signal (ES) which contain a less seriously errored concatenated signal.

2. Method according to claim 1,
**characterised in that**
the error message (SM) is supplied as supplementary information to a logic circuit (LS) which effects the selection from one of the receive signals (BS, ES) via switches (U).

3. Method according to claim 1,
**characterised in that**
the error message (SM) is inserted in each case as a flag bit (FB) into all concatenated pulse frames (AU-4₁, AU-4₂, ...) which transmit a concatenated signal.

4. Method according to claim 1
**characterised in that**
the number of errored concatenated pulse frames of the operation and replacement signal is evaluated in each case and that the concatenated pulse frames of one of the receive signals (BS, ES) are selected which contain the qualitatively better concatenated signal.

5. Method according to claim 1,
**characterised in that**
the error message (SM) contains the degree of severity of the error and that the concatenated pulse frames of one of the receive signals (BS, ES) are selected which contain the qualitatively better concatenated signal.

6. Method according to claim 1,
**characterised in that**
the switchover is effected via commonly actuated switches (U1 to U4).

## Revendications

1. Procédé pour la sélection de signaux concaténés à partir de signaux de réception (BS, ES) de la hiérarchie numérique synchrone, qui sont transmis dans plusieurs trames d'impulsion (AU-4) concaténées entre elles au moyen de différents chemins de signal (P1, P2),
**caractérisé en ce que**,
en cas de réception d'au moins une trame d'impulsion (AU-4) perturbée, un message de perturbation (SM1, ...) est respectivement attribué à cette trame et aux trames d'impulsion concaténées avec elle, qui entraîne une commutation sur des trames d'impulsion concaténées correspondantes de l'autre signal de réception (ES), qui contiennent un signal concaténé moins perturbé.

2. Procédé selon la revendication 1,
**caractérisé en ce que**
le message de perturbation (SM) est amené comme information supplémentaire à un circuit logique (LS) qui entraîne par des commutateurs (U) la sélection à partir de l'un des signaux de réception (BS, ES).

3. Procédé selon la revendication 1,
**caractérisé en ce que**
le message de perturbation (SM) est inséré respectivement comme bit indicateur (FB) dans toutes les trames d'impulsion (AU-4₁, AU-4₂, ...) concaténées, qui transmettent un signal concaténé.

4. Procédé selon la revendication 1,
**caractérisé en ce que**
à chaque fois le nombre des trames d'impulsion concaténées perturbées du signal d'exploitation et du signal de remplacement est analysé et **en ce que** les trames d'impulsion concaténées de l'un des signaux de réception (BS, ES) sont sélectionnées, lesquelles contiennent le signal concaténé le meilleur au plan qualitatif.

5. Procédé selon la revendication 1,
**caractérisé en ce que**
le message de perturbation (SM) contient le degré de perturbation et **en ce qu'**on sélectionne les trames d'impulsion concaténées de l'un des signaux de réception (BS, ES), qui contiennent le meilleur signal concaténé au plan qualitatif.

6. Procédé selon la revendication 1,
**caractérisé en ce que**
la commutation s'effectue au moyen de commutateurs (U1 jusqu'à U4) actionnés conjointement.
